# FASCICULE DE BREVET EUROPEEN

(11) **EP 0 662 414 B1**
(45) Date de publication et mention de la délivrance du brevet: **25.03.1998**
(21) Numéro de dépôt: 95400009.7
(22) Date de dépôt: 03.01.1995
(51) Int. Cl.: B62D 1/19, F16F 7/12

(54) **Organe d'absorption d'énergie notamment pour colonne de direction de véhicule automobile**
Energieabsorbierende Einrichtung, insbesondere für eine Kraftfahrzeuglenksäule
Energy absorbing device, especially for a steering column of a motor vehicle

(30) Priorité: 06.01.1994 FR 9400085
(43) Date de publication de la demande: 12.07.1995
(73) Titulaire: LEMFÖRDER NACAM SA, 41100 Vendôme (FR)
(72) Inventeur: Fouquet, Jean-Michel, F-41100 Vendome (FR); Duval, Benoît, F-41100 Vendome (FR); Dupont, Eddy, F-41100 Vendome (FR)
(74) Mandataire: Phélip, Bruno

(56) Documents cités:
- EP-A- 0 252 031
- GB-A- 1 120 799
- GB-A- 2 268 125
- US-A- 4 901 592
- MACHINE DESIGN, vol. 37, no.30, 23 Décembre 1965 CLEVELAND US, page 111 'Deforming Wire Absorbs Shock'

## Description

La présente invention a pour objet un organe d'absorption d'énergie, notamment applicable aux colonnes de direction de véhicules automobiles, en vue d'absorber l'énergie en cas de choc.

On connaît de nombreux dispositifs ou organes d'absorption d'énergie, mais ils possèdent souvent un encombrement relativement important et ils ne sont donc pas aisément utilisables dans des structures dont le volume disponible est réduit. Le dimensionnement de l'organe d'absorption d'énergie ainsi que son coût et sa complexité sont les inconvénients les plus fréquemment rencontrés.

Le document EP-O-252.031 décrit un organe d'absorption d'énergie comprenant deux éléments mobiles en translation l'un par rapport à l'autre, l'un des éléments portant deux axes autour desquels sont enroulées respectivement deux bandes métalliques formant spirale, l'une des extrémités de chaque bande étant solidaire d'un axe tandis que l'autre extrémité est fixée à l'autre élément. Durant l'absorption d'énergie, les deux éléments se rapprochent l'un de l'autre en entraînant le déroulement des deux bandes métalliques. L'utilisation de bandes métalliques formant spirale conduit à une dimension de l'organe d'absorption d'autant plus importante que le niveau d'effort à atteindre est élevé et que la course d'absorption souhaitée est grande.

Le document GB-1.120.799 décrit une colonne de direction telle que définie dans le préambule de la revendication 1, comprenant deux parties télescopiques s'emboîtant l'une dans l'autre et munie d'un dispositif d'absorption d'énergie.

Ce dernier comprend des éléments déformables consistant en des bandes ou des tiges (Figure 10) métalliques flexibles, et des axes autour desquels passent les éléments déformables. Lors d'un choc du conducteur contre le volant, les parties télescopiques de la colonne de direction s'enfoncent l'une dans l'autre. Les éléments déformables sont alors tirés autour des axes et se déforment, absorbant une partie de l'énergie par cintrage et allongement.

Le document GB-2.268.125 concerne une colonne de direction pour véhicule automobile, comprenant un dispositif d'absorption d'énergie composé d'un support rigide accouplé au tube de colonne et ayant deux fentes longitudinales, parallèles à l'axe de la colonne. Un boulon relie ce support à une console en vue du réglage de la colonne de direction. Ce boulon est associé à une bande déformable, soudée au support. Ce dispositif absorbe l'énergie en cas de choc par déplacement du boulon vers l'extérieur des fentes longitudinales, entraînant un déplacement de la bande déformable. Dans ce dispositif, le système d'absorption n'intervient pas lors du réglage de la colonne, ni lors de la première phase de l'impact.

Un dispositif adaptable sur une colonne de direction réglable en inclinaison est décrit dans le document US-4.9O1.592. Il comprend une plaque en forme de U dont l'extrémité d'une branche est reliée à la colonne de direction et l'autre à un support fixé à la carrosserie. L'absorption d'énergie est réalisée par le déplacement et la déformation de la partie courbe de la plaque en forme de U.

Le but de la présente invention est de proposer un organe d'absorption d'énergie d'encombrement relativement réduit, d'une grande simplicité de conception, qui est susceptible d'être monté facilement, notamment dans les dispositifs d'absorption d'énergie de colonne de direction de véhicule automobile et qui permet également d'absorber un effort aussi constant que possible sur une course importante.

L'invention concerne ainsi un organe d'absorption d'énergie tel que défini dans la revendication 1.

Dans un mode de réalisation de l'organe d'absorption d'énergie selon l'invention, la section du fil peut être constante ou évolutive. De même, le diamètre d'enroulement du fil sur l'axe-support peut être constant ou évolutif.

La matière constitutive du fil doit être choisie pour pouvoir résister à des efforts de traction importants. Le fil peut être ainsi réalisé en métal par exemple en acier ou en matière plastique.

Selon un mode de réalisation, le premier élément étant muni d'une pièce ayant une forme générale de U, une tige s'étendant entre les ailes du U en étant fixée sur elles et la tige recevant un manchon pouvant tourner sur la tige, le fil est enroulé autour du manchon.

En variante, le fil peut être directement enroulé autour de la tige.

Du côté de l'extrémité du fil, celle-ci s'accroche sur le deuxième élément par des moyens quelconques. Par exemple une plaque d'accrochage peut être soudée à l'extrémité du fil, si celui-ci est métallique, ladite plaque comportant un trou de passage pour un moyen de fixation sur le deuxième élément.

Ainsi qu'on l'a mentionné précédemment, l'application préférée de l'organe d'absorption d'énergie selon l'invention consiste en une colonne de direction de véhicules automobiles. De telles colonnes connues comprennent un arbre de direction monté dans un tube-corps, qui est supporté et bloqué sur la carrosserie dans la position voulue. Dans une telle application, au moins un organe d'absorption d'énergie selon l'invention, du type défini précédemment, est prévu entre le tube-corps et la carrosserie.

Ainsi, le tube-corps ou toute pièce solidaire de celui-ci peut constituer le premier élément dans le montage de l'organe d'absorption d'énergie, la carrosserie ou toute pièce solidaire de celle-ci constituant alors le deuxième élément. Mais, en variante, un montage réciproque est parfaitement possible.

Selon un mode de réalisation de l'invention, la colonne de direction comporte un tel organe d'absorption d'énergie, disposé de chaque côté du tube-corps. Dans ce type de montage, la partie enroulée du fil de chaque organe d'absorption d'énergie coopère avec un axe-support solidaire du tube-corps, tandis que l'extrémité du fil est fixée sur la carrosserie.

L'invention procure un organe d'absorption d'énergie de construction simple, ayant un encombrement particulièrement réduit, tout en permettant d'absorber un effort aussi constant que possible sur une course importante, ce qui est très intéressant dans le cas où de tels organes amortisseurs sont utilisés dans les dispositifs d'absorption d'énergie des colonnes de direction de véhicules automobiles.

Le système d'absorption d'énergie selon l'invention utilise un fil enroulé en spires jointives et procure des avantages pratiques importants, entre autres:
- le diamètre d'enroulement du fil est constant et de ce fait l'effort de déroulement est constant tout au long du déroulement du fil. Et il est important de rappeler que le diamètre d'enroulement est un des deux paramètres fondamentaux du niveau d'absorption d'énergie,
- l'encombrement nécessaire pour loger le système d'absorption d'énergie est plus réduit en diamètre que dans le cas d'un système à bande. Ceci est d'autant plus important que le niveau d'effort à atteindre est élevé (ce qui requiert un diamètre de fil important) et que la course d'absorption est grande (nombre de tours de fils important),
- il est plus facile de garantir industriellement une géométrie de type fil (une seule dimension à contrôler) qu'une géométrie type bande (deux dimensions à contrôler: épaisseur et largeur). Et cela est d'autant plus intéressant que le diamètre du fil est le deuxième paramètre fondamental du niveau d'absorption d'énergie.

L'invention sera encore illustrée, sans être aucunement limitée, par la description qui suit de certains de ses modes de réalisation, en référence aux dessins annexés sur lesquels:
Figure 1 est une coupe axiale d'un organe d'absorption d'énergie suivant l'invention.
Figure 2 est une vue suivant II-II de la figure 1.
Figure 3 est une vue en perspective d'une colonne de direction de véhicule automobile avec un organe d'absorption d'énergie suivant l'invention.
Figure 4 est une vue semblable à la figure 3 après un choc.
Figure 5 est une vue en perspective d'une colonne de direction de véhicule automobile avec un organe d'absorption d'énergie suivant un autre mode de réalisation de l'invention.
Figure 6 est une vue semblable à la figure 5 après un choc.
Figure 7 est une vue de dessus d'une colonne de direction de véhicule automobile avec un organe d'absorption d'énergie suivant un autre mode de réalisation de l'invention.

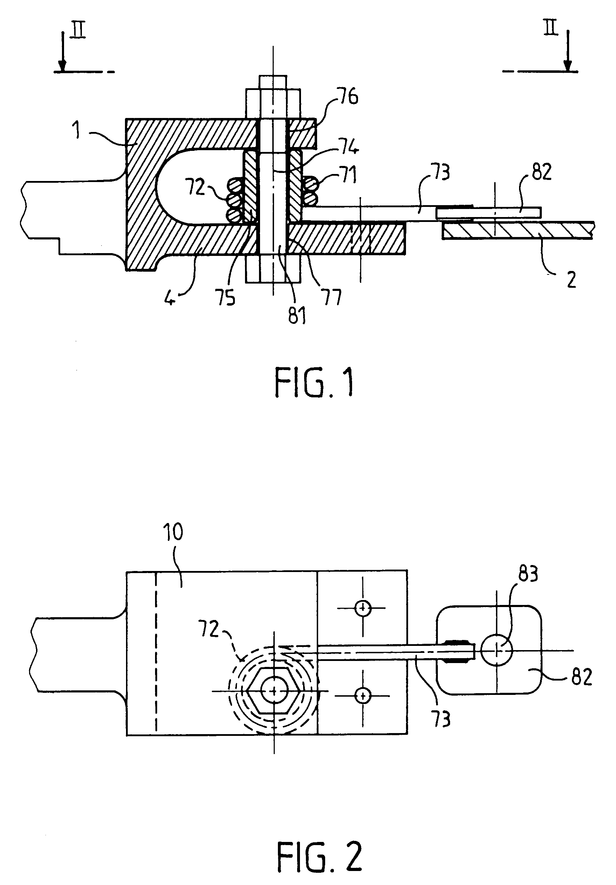

Ainsi qu'on peut le voir notamment sur les figures 1 et 2, l'organe d'absorption d'énergie selon l'invention est interposé entre deux éléments 1 et 2. Cet organe d'absorption d'énergie comprend essentiellement un fil 71 dont une partie rectiligne 73 est fixée par son extrémité libre à l'élément 2 et un enroulement 72 coopère avec un axe-support monté sur l'élément 1.

Dans le mode de réalisation représenté aux figures 1 et 2, cet axe-support est constitué par un manchon ou entretoise 75, disposé entre des portées 76 et 77 de l'élément 1. Un boulon 81 maintient l'ensemble en place. Le manchon 75 peut tourner autour de la tige du boulon 81. L'extrémité de l'enroulement 72 du fil peut être fixée au manchon 75.

A son autre extrémité, le fil 71 est fixé à l'élément 2. A cet effet, une plaque d'accrochage 82 est soudée à l'extrémité de la partie 73 du fil 71, si celui-ci est métallique. Cette plaque d'accrochage 82 comporte un trou de passage 83 destiné à recevoir un moyen de fixation sur l'élément 2.

Selon un mode de réalisation de l'invention, le fil 71, enroulé autour du manchon 75 se déroule plastiquement en cas d'effort de traction causé par l'écartement des éléments 1 et 2. Ainsi qu'on le verra plus loin, dans l'application à une colonne de direction de véhicule automobile, l'effort de traction extérieur se produit en cas de choc. Le manchon 75 étant mobile en rotation, l'enroulement 72 du fil 71 se déroule sous l'action de l'effort de traction. L'effort nécessaire pour dérouler le fil 71 est prédéterminé pour amortir et absorber l'effort appliqué. Dans la position finale, le fil 71 peut être partiellement ou entièrement déroulé. Le déroulement total correspond au taux maximum de l'effort susceptible d'être absorbé.

Afin de pouvoir moduler l'énergie à absorber, la section du fil 71 peut être constante ou évolutive. De la même façon, le diamètre d'enroulement du fil 71 dans l'enroulement 72 est constant ou évolutif. On peut jouer également sur la nature du fil, celui-ci pouvant être métallique ou en matière plastique.

Après essai, il s'avère que le niveau d'effort est très constant sur l'ensemble de la course de déroulage du fil 71. Ainsi, l'organe d'absorption d'énergie selon l'invention présente l'avantage important de pouvoir absorber un effort aussi constant que possible sur une course importante.

Du fait de sa constitution, le fil 71 permet d'absorber un effort sur une grande longueur. Dans un exemple de réalisation du type représenté sur les figures 1 et 2, le diamètre extérieur du manchon 75 est de 2O mm, le fil 71 a un diamètre d'enroulement moyen de 25 mm. Ainsi, chaque spire enroulée permet d'absorber un effort sur une course égale à 78 mm environ. Avec trois spires d'enroulement et une demi-spire morte, non utilisée, qui sert au maintien du fil 71 sur le manchon 75, la course totale de déroulement est donc de l'ordre de 230 mm. L'ensemble avant déroulage, a l'encombrement d'un cylindre de 3O mm environ sur une hauteur d'une cinquantaine de mm, pour effort de déroulage de 1000 Newton.

Le diamètre intérieur et l'épaisseur du manchon 75 doivent être choisis pour éviter que le manchon 75, sous les efforts induits par le déroulement du fil 71, ne se déforme d'une manière importante et ne se coince sur l'axe constitué par la tige du boulon 81.

De ce fait, le diamètre minimum possible d'enroulement du fil 71 est proche de celui décrit. Il est en revanche possible de faire varier la matière et le diamètre du fil 71. Ces paramètres sont a priori faciles à maîtriser en production. Dans le système qui vient d'être décrit, le frottement n'intervient que dans l'articulation du manchon 75 et de l'axe constitué par le boulon 81.

Selon l'invention, le fil peut être de section circulaire, carrée, rectangulaire ou de forme quelconque.

Selon l'invention, il faut noter que le fil 71 peut être fait en acier ou en quelque autre matière. Le déroulement du fil 71 peut se faire dans un plan quelconque comme par exemple dans un plan horizontal ou vertical. Le manchon 75 peut être métallique ou en matière plastique.

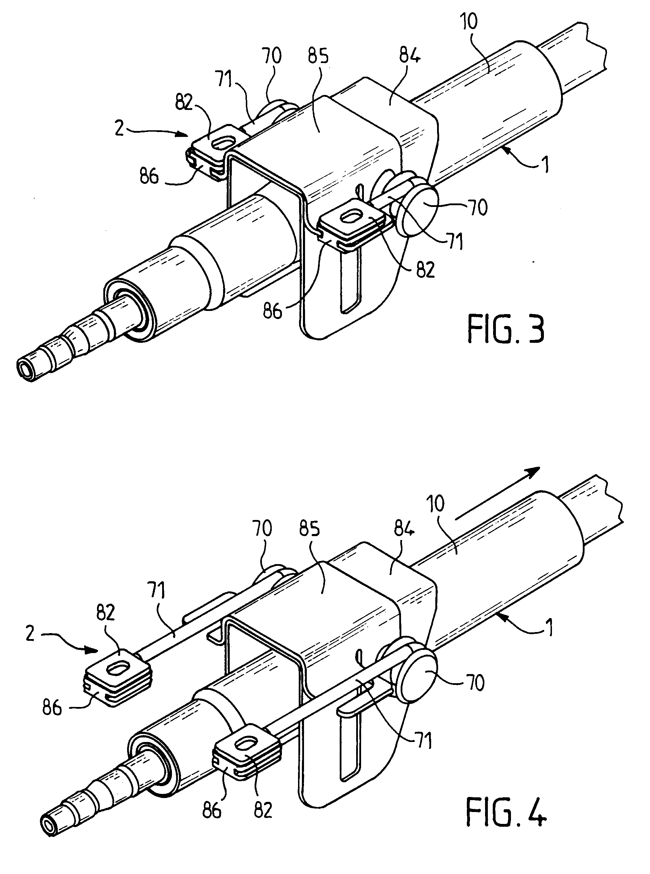

Les figures 3 et 4 représentent un cas d'application de l'organe d'absorption d'énergie selon l'invention, qui se monte sur une colonne de direction de véhicule automobile. L'arbre de direction est monté dans un tube-corps 10. Ce tube-corps 10 est supporté et bloqué dans la carrosserie à la position voulue. Un support est lié à la carrosserie et reçoit le tube-corps. Le tube-corps 10 comporte une patte de fixation de la colonne 84 et un support de colonne 85.

Un organe d'absorption d'énergie 7O selon l'invention est disposé de chaque côté du tube-corps 10. L'enroulement 72 du fil 71 de chaque organe d'absorption d'énergie 7O est monté sur un axe de maintien d'un boulon 81 solidaire du tube-corps 10. Une plaque d'accrochage 82 reçoit l'extrémité de la partie rectiligne 73 du fil 71 et est fixée sur la carrosserie 2. Chaque plaque d'accrochage 82 est montée sur un système d'accrochage déclipsable 86. Dans ce cas d'application, la partie rectiligne 73 se trouve au-dessus de l'axe de maintien.

En cas de choc, l'organe d'absorption d'énergie sert à bloquer le tube-corps grâce au surserrage, et la colonne de direction se rétracte, ce qui provoque le déclipsage de l'accrochage 86. L'organe d'absorption d'énergie 7O est ainsi maintenu solidaire du support de colonne 85 par sa plaque d'accrochage 82.En même temps, la colonne poursuit sa rétraction en entraînant avec elle la patte de fixation 84, ainsi que l'axe de maintien du fil 71.

Le déplacement entre le support de colonne 85 et la patte de fixation 84 engendre une tension dans le fil 71. Cette tension provoque le déroulage de l'enroulement 72, sur l'axe de maintien constitué par le boulon 81. Ce déroulage engendre un effort résistant qui permet d'absorber l'énergie. Le niveau d'absorption d'énergie est ainsi géré par le diamètre du fil 71 dans l'enroulement 72, le diamètre d'enroulement de ce fil 71, ainsi que sa matière.

L'organe d'absorption d'énergie 7O selon l'invention présente ainsi l'avantage de donner une absorption d'énergie contrôlée dans un encombrement très réduit.

Dans les modes de réalisation décrits précédemment, on a illustré un montage dans lequel l'enroulement 72 du fil 71 coopère avec un manchon ou entretoise monté sur la tige du boulon 81. Une telle disposition n'est cependant pas obligatoire. En effet, l'enroulement 72 peut être monté directement sur la tige du boulon 81; celle-ci peut alors être graissée, ou encore traitée en surface. Dans une autre variante, l'enroulement 72 peut être enroulé sur un palier libre en rotation pour éviter une dispersion de frottement.

Dans son application aux colonnes de direction de véhicules automobiles, l'axe de maintien du fil 71 peut être fixé sur des pattes liées au tube-corps 10 ou être directement fixé sur lui. Egalement, l'axe de maintien peut être fixé sur le support de colonne 85. De même, le déclipsage peut être réalisé au niveau du tube-corps de colonne plutôt qu'au niveau de la plaque d'accrochage 82.

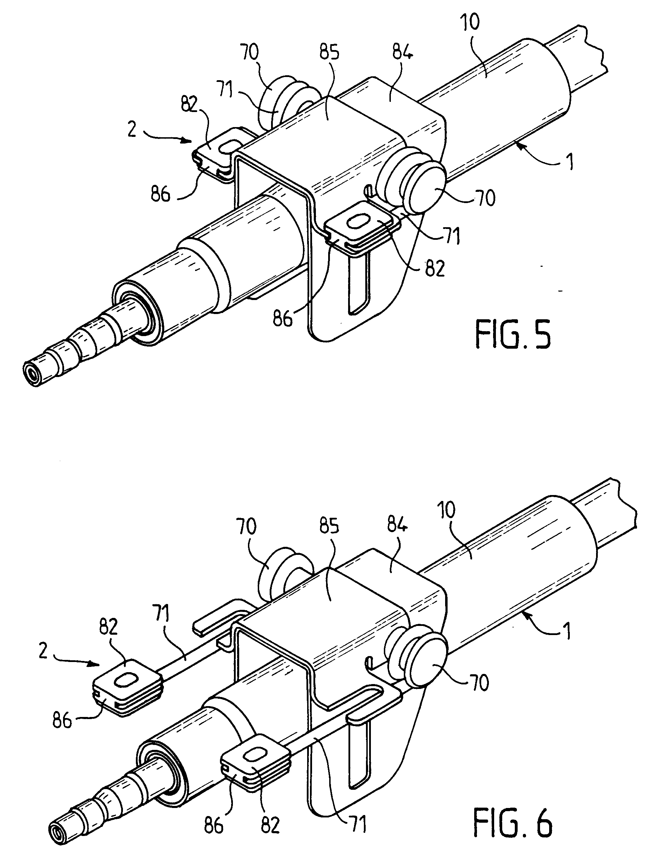

Les figures 5 et 6 représentent une colonne de direction qui comporte un organe d'absorption d'énergie 7O disposé de chaque côté du tube-corps 10. L'enroulement 72 du fil 71 de chaque organe d'absorption d'énergie est monté sur un axe de maintien, solidaire du tube-corps 10. La plaque d'accrochage 82 de l'extrémité de la partie rectiligne 73 du fil 71 est fixée sur la carrosserie 2, de manière que la partie rectiligne 73 du fil se trouve au-dessous de l'axe de maintien.

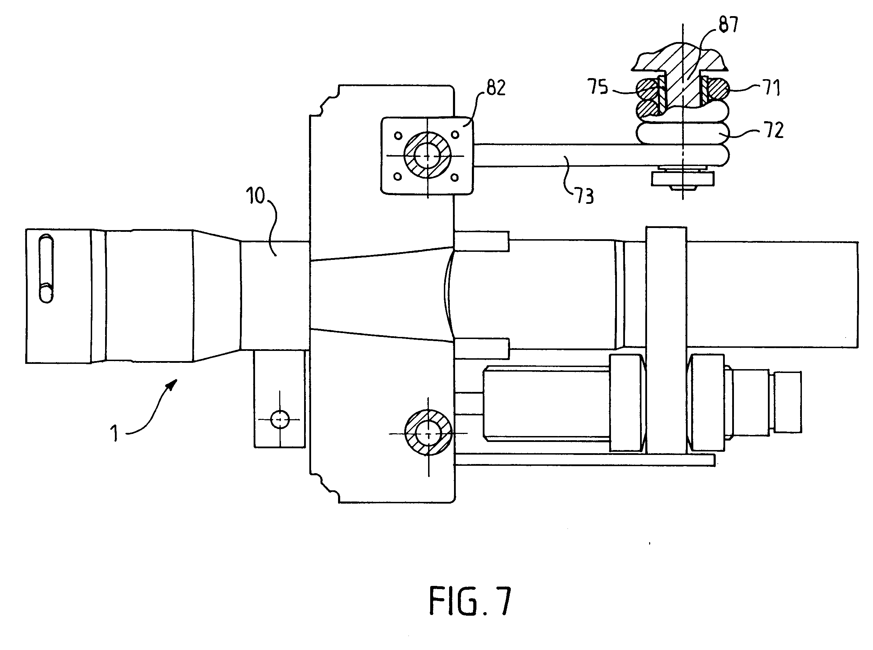

La Figure 7 représente une colonne de direction qui comporte un organe d'absorption d'énergie disposé d'un côté du tube-corps 10. L'enroulement 72 du fil 71 de l'organe d'absorption d'énergie est monté sur un axe de maintien 87, solidaire de la carrosserie. La plaque d'accrochage 82 de l'extrémité de la partie rectiligne 73 du fil 71 est fixée au tube-corps 10, de manière que la partie rectiligne 73 du fil se trouve au-dessus de l'axe de maintien 87.

Les signes de référence insérés après les caractéristiques techniques mentionnées dans les revendications, ont pour seul but de faciliter la compréhension de ces dernières, et n'en limitent aucunement la portée.

## Revendications

1. Organe d'absorption d'énergie interposé entre deux éléments (1, 2) susceptibles de s'écarter l'un de l'autre sous l'action d'un effort extérieur, ledit organe comportant une première partie s'étendant autour d'un axe-support monté sur le premier élément (1) et une seconde partie rectiligne prolongeant la première partie, ayant une extrémité libre fixée sur le second élément (2) et s'étendant entre les deux éléments (1, 2) en étant orientée sensiblement dans la direction de l'effort, ledit organe étant caractérisé en ce qu'il consiste en un fil (71) enroulé en spires jointives constituant un enroulement (72), disposé autour de l'axe-support (74, 75) du premier élément (1), de sorte que la traction exercée sur le fil (71) par l'écartement des deux éléments (1, 2) provoque le déroulement de l'enroulement (72) autour de l'axe-support (74, 75) et ainsi l'absorption de l'énergie demandée.

2. Organe d'absorption d'énergie selon la revendication 1, caractérisé en ce que la section du fil (71) est constante ou évolutive.

3. Organe d'absorption d'énergie selon l'une des revendications 1 ou 2, caractérisé en ce que le diamètre d'enroulement (72) du fil (71) sur l'axe support (74) est constant ou évolutif.

4. Organe d'absorption d'énergie selon l'une quelconque des revendications 1 à 3, caractérisé en ce que le fil (71) est réalisé en métal, par exemple en acier, ou en matière plastique.

5. Organe d'absorption d'énergie selon l'une quelconque des revendications 1 à 4, caractérisé en ce que le premier élément (1) étant muni d'une pièce ayant une forme générale de U, une tige (81) s'étendant entre les ailes (76, 77) du U en étant fixée sur elles et la tige recevant un manchon (75) pouvant tourner sur ladite tige (81), le fil (71) est enroulé autour du manchon (75).

6. Organe d'absorption d'énergie selon l'une quelconque des revendications 1 à 4, caractérisé en ce que le fil (71) est directement enroulé autour de la tige (74).

7. Organe d'absorption d'énergie selon l'une quelconque des revendications 1 à 6, caractérisé en ce que le fil (71) est métallique et que ladite extrémité de sa seconde partie (73) comporte une plaque d'accrochage (82) qui lui est fixée par soudure et comporte un trou de passage (83) d'un moyen de fixation sur l'élément (2).

8. Colonne de direction de véhicule automobile dont l'arbre de direction est monté dans un tube-corps (10), qui est supporté et bloqué sur la carrosserie à la position voulue, caractérisée en ce qu'au moins un organe d'absorption d'énergie (70) selon l'une quelconque des revendications 1 à 7 est prévu entre le tube-corps et la carrosserie.

9. Colonne de direction selon la revendication 8, caractérisée en le que le tube-corps (10) ou toute pièce solidaire de celui-ci constitue le premier élément (1) du montage de l'organe d'absorption d'énergie (70), la carrosserie ou toute pièce solidaire de celle-ci constituant alors le deuxième élément (2).

10. Colonne de direction selon la revendication 8, caractérisée en ce que la carrosserie ou toute pièce solidaire de celle-ci constitue le premier élément (1) du montage de l'organe d'absorption d'énergie (70), le tube-corps (10) constituant alors le deuxième élément (2).

11. Colonne de direction selon l'une quelconque des revendications 8 à 10, caractérisée en ce qu'elle comporte un organe d'absorption d'énergie (70) disposé de chaque côté du tube-corps (10).

12. Colonne de direction selon la revendication 11, caractérisée en ce qu'elle comporte un organe d'absorption d'énergie (70) disposé de chaque côté du tube-corps (10), l'enroulement (72) du fil (71) de chaque organe d'absorption d'énergie (70) étant monté sur l'axe-support (74) solidaire du tube-corps (10), une plaque d'accrochage (82) de ladite extrémité de la partie rectiligne (73) du fil (71) étant fixée sur la carrosserie (2), la partie rectiligne (73) étant au-dessous ou au-dessus de l'axe-support (74).

## Claims

1. Energy-absorbing device interposed between two elements (1,2) which are able to move apart from each other under the action of an external force, said device comprising a first part extending around a supporting axis, mounted on the first element (1) and a second rectilinear part prolonging the first part, having a free end fixed on the second element (2) and extending between the two elements (1,2) while being orientated substantially in the direction of the force, said device being characterized in that it consists of a wire (71) wound in contiguous turns constituting a winding (72), arranged around the supporting axis (74,75) of the first element (1), such that the traction exerted on the wire (71) by the moving apart of the two elements (1,2) causes the winding (72) to unwind about the supporting axis (74,75) and thus the absorption of the desired energy.

2. The energy-absorbing device according to claim 1, characterized in that the cross-section (71) of the wire is constant or evolutive.

3. The energy-absorbing device according to claim 1 or claim 2, characterized in that the winding (72) diameter of the wire (71) on the supporting axis (74) is constant or evolutive.

4. The energy-absorbing device according to any one of claims 1 to 3, characterized in that the wire (71) is made from metal, for example steel, or from a plastic material.

5. The energy-absorbing device according to any one of claims 1 to 4, characterized in that the first element (1) being provided with a component having a general U shape, a rod (81) extending between the wings (76,77) of the U and to which it is fixed and said rod receiving a sleeve (75) being able to turn on said rod (81), the wire (71) is wound around the sleeves (75).

6. The energy-absorbing device according to any one of claims 1 to 4, characterized in that the wire (71) is wound directly around the rod (74).

7. The energy-absorbing device according to any one of claims 1 to 6, characterized in that the wire (71) is metallic and in which said end of its second part (73) comprises a securing plate (82) which is fixed to said end by welding and is provided with a passage hole (83) for a means to secure it to the element (2).

8. Automobile vehicle steering column whose steering shaft is mounted in a body-tube (10), which is supported and locked to the vehicle body in the desired position, characterized in that at least one energy-absorbing device (70) according to any of claims 1 to 7 is mounted between the body-tube and the vehicle body.

9. The steering column according to claim 8, characterized in that the body-tube (10) or any component rigidly locked to it constitutes the first element (1) of the mounting of the energy-absorbing device (70), the vehicle body or any component rigidly locked to it then constituting the second element (2).

10. The steering column according to claim 8, characterized in that the vehicle body or any component rigidly locked to it constitutes the first element (1) of the mounting of the energy-absorbing device (70), the body-tube (10) then constituting the second element (2).

11. The steering column according to any of claims 8 to 10, characterized in that it comprises an energy-absorbing device (70) arranged on each side of the body-tube (10).

12. The steering column according to claim 11, characterized in that it comprises an energy-absorbing device (70) arranged on each side of the body-tube (10), the winding (72) of the wire (70) of each energy-absorbing device (70) being mounted on a supporting axis (74) rigidly locked to the body tube (10), a securing plate (82) of said end of the rectilinear part (73) of the wire (71) being fixed onto the vehicle body (2), said rectilinear part (73) being above or below the supporting axis (74).

## Patentansprüche

1. Organ zur Energieaufnahme, das zwischen zwei Elementen (1, 2) angeordnet ist, die in der Lage sind, sich voneinander unter der Einwirkung einer äußeren Kraft zu entfernen, wobei dieses Organ einen ersten Teil, der sich um eine Trägerachse erstreckt, die auf dem ersten Element (1) montiert ist, und einen zweiten geradlinigen Teil umfaßt, der den ersten Teil verlängert und ein freies Ende aufweist, das an dem zweiten Element (2) befestigt ist und sich zwischen den beiden Elementen (1, 2) erstreckt, wobei es im wesentlichen in die Richtung der Kraft ausgerichtet ist, wobei das Organ dadurch gekennzeichnet ist, daß es aus einem Draht (71) besteht, der in aneinanderliegenden Windungen aufgerollt ist und eine Wicklung (72) bildet, die um die Trägerachse (74, 75) des ersten Elements (1) angeordnet ist, so daß der auf den Draht (71) durch das Entfernen der beiden Elemente (1, 2) voneinander ausgeübte Zug das Abwickeln der Wicklung (72) um die Trägerachse (74, 75) und somit die Aufnahme der erforderlichen Energie bewirkt.

2. Organ zur Energieaufnahme nach Anspruch 1, dadurch gekennzeichnet, daß der Querschnitt des Drahtes (71) konstant oder sich erweiternd ist.

3. Organ zur Energieaufnahme nach einem der Ansprüche 1 oder 2, dadurch gekennzeichnet, daß der Wicklungsdurchmesser (72) des Drahtes (71) auf der Trägerachse (74) konstant oder sich erweiternd ist.

4. Organ zur Energieaufnahme nach einem der Ansprüche 1 bis 3, dadurch gekennzeichnet, daß der Draht (71) aus Metall, beispielsweise Stahl, oder Kunststoff hergestellt ist.

5. Organ zur Energieaufnahme nach einem der Ansprüche 1 bis 4, dadurch gekennzeichnet, daß, weil das erste Element (1) mit einem Teil versehen ist, der eine allgemeine U-Form aufweist, weil sich eine Stange (81) zwischen den Schenkeln (76, 77) des U erstreckt, die an diesen befestigt ist, und weil die Stange eine Hülse (75) aufnimmt, die sich auf der Stange (81) drehen kann, der Draht (71) um die Hülse (75) gewickelt ist.

6. Organ zur Energieaufnahme nach einem der Ansprüche 1 bis 4, dadurch gekennzeichnet, daß der Draht (71) direkt um die Stange (74) gewickelt ist.

7. Organ zur Energieaufnahme nach einem der Ansprüche 1 bis 6, dadurch gekennzeichnet, daß der Draht (71) metallisch ist und daß das Ende seines zweiten Teils (73) eine Aufhängeplatte (82) umfaßt, die an ihm durch Schweißen befestigt ist, und ein Durchgangsloch (83) für ein Mittel zur Befestigung am Element (2) umfaßt.

8. Lenksäule eines Kraftfahrzeugs, deren Lenkspindel in einem Röhrenkörper (10) montiert ist, der von der Karosserie getragen und in der gewünschten Position festgestellt wird, dadurch gekennzeichnet, daß mindestens ein Organ zur Energieaufnahme (70) nach einem der Ansprüche 1 bis 7 zwischen dem Röhrenkörper und der Karosserie vorgesehen ist.

9. Lenksäule nach Anspruch 8, dadurch gekennzeichnet, daß der Röhrenkörper (10) oder jeder Teil, der mit diesem verbunden ist, das erste Element (1) für die Montage des Organs zur Energieaufnahme (70) darstellt, wobei die Karosserie oder jeder mit dieser verbundene Teil nun das zweite Element (2) darstellt.

10. Lenksäule nach Anspruch 8, dadurch gekennzeichnet, daß die Karosserie oder jeder mit ihr verbundene Teil das erste Element (1) für die Montage des Organs zur Energieaufnahme (70) darstellt, wobei der Röhrenkörper (10) nun das zweite Element (2) darstellt.

11. Lenksäule nach einem der Ansprüche 8 bis 10, dadurch gekennzeichnet, daß sie ein Organ zur Energieaufnahme (70) umfaßt, das auf jeder Seite des Röhrenkörpers (10) angeordnet ist.

12. Lenksäule nach Anspruch 11, dadurch gekennzeichnet, daß sie ein Organ zur Energieaufnahme (70) umfaßt, das auf jeder Seite des Röhrenkörpers (10) angeordnet ist, daß die Wicklung (72) des Drahtes (71) jedes Organs zur Energieaufnahme (70) an der Trägerachse (74) montiert ist, die mit dem Röhrenkörper (10) verbunden ist, daß eine Aufhängeplatte (82) für das Ende des geradlinigen Teils (73) des Drahtes (71) an der Karosserie (2) befestigt ist und daß sich der geradlinige Teil (73) unter oder über der Trägerachse (74) befindet.
